(19) Europäisches Patentamt / European Patent Office / Office européen des brevets

(11) **EP 2 835 942 B1**

(12) **EUROPEAN PATENT SPECIFICATION**

(45) Date of publication and mention of the grant of the patent:
**09.10.2019 Bulletin 2019/41**

(21) Application number: **13306124.2**

(22) Date of filing: **05.08.2013**

(51) Int Cl.:
*H04L 12/727* *(2013.01)*    *H04L 12/771* *(2013.01)*
*H04L 12/721* *(2013.01)*    *H04L 12/741* *(2013.01)*
*H04L 29/08* *(2006.01)*

(54) **Dynamic interest forwarding mechanism for information centric networking**

Dynamischer Interessenweiterleitungsmechanismus für informationszentrierte Vernetzung

Mécanisme de réacheminement d'intérêt dynamique pour réseautage centrique d'informations

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.02.2015 Bulletin 2015/07**

(73) Proprietor: **Alcatel Lucent**
**91620 Nozay (FR)**

(72) Inventors:
• **Perino, Diego**
  **91620 NOZAY (FR)**
• **Carofiglio, Giovanna**
  **91620 NOZAY (FR)**
• **Rossi, Dario**
  **75015 PARIS (FR)**
• **Rossini, Giuseppe**
  **75011 PARIS (FR)**

(74) Representative: **DREISS Patentanwälte PartG mbB**
**Postfach 10 37 62**
**70032 Stuttgart (DE)**

(56) References cited:
**EP-A1- 2 323 346**

• **MIURA H ET AL: "Content routing with network support using passive measurement in content distribution networks", COMPUTER COMMUNICATIONS AND NETWORKS, 2002. PROCEEDINGS. ELEVENTH INTE RNATIONAL CONFERENCE ON 14-16 OCT. 2002, PISCATAWAY, NJ, USA,IEEE, 14 October 2002 (2002-10-14), pages 96-101, XP010610865, ISBN: 978-0-7803-7553-6**
• **GIUSEPPE ROSSINI ET AL: "Evaluating CCN multi-path interest forwarding strategies", COMPUTER COMMUNICATIONS, vol. 36, no. 7, 1 April 2013 (2013-04-01), pages 771-778, XP055087058, ISSN: 0140-3664, DOI: 10.1016/j.comcom.2013.01.008**

**Description**

FIELD OF THE INVENTION

The present invention relates to the technical field of Content Centric Networking (CCN), and particularly to mechanisms to realize dynamic request forwarding in CCN nodes.

BACKGROUND OF THE INVENTION

Information Centric Networking (*ICN*), Content Centric Networking (*CCN*) or Named data networking (*NDN*) have introduced a new networking model, where the communication is centered on named-data rather than host address. Indeed, in CCN every data packet is identified, addressed and retrieved by its unique name instead of its physical location. All network nodes potentially store the data that they forward to serve future requests for the same content. To this aim, it is possible to equip network nodes with enhanced storage capabilities such as caches/buffer memories. Indeed, storage resources can be used to maintain temporary content replicas spread through the network for a period of time ranging from minutes to hours or days. The availability of different replicas depends on several factors, such as content popularity, cache replacement policies, and is impacted by the request forwarding policy. The term "request forwarding policy" refers here broadly and as non-limitative, to ways/rules to manage the forwarding of a content request within a network comprising nodes. In fact, request forwarding policy plays an important role in providing better end-users performance (ex: data delivery time) and reducing the amount of data transferred in a network, i.e. providing a lower network load.

In CCN, content items/files are split in a sequence of chunks uniquely identified by a hierarchical name of possibly variable size $B$ components, for instance the $B$ components may be "/bell_labs/video/talks.avi/chunk1". By considering the following example, the $B$-1 components identifies the content item name (/bell_labs/video/talks.avi), while the last component specifies the chunk name (chunk1). Servers in CCN announce the set of prefixes (here /bell_labs/video/ or /bell_labs/) of content items they can serve by means of routing protocols, i.e. prefixes of permanently stored items. Network nodes receiving these announcements build their forwarding/routing tables accordingly. For instance network nodes store in their routing tables, the shortest paths in terms of delay towards a permanent copy of a file. Chunks of a file are then requested by a receiver, through Interest packets that are forwarded by network nodes towards servers storing permanent copies of the requested chunks.

Interest packet here is a packet type, referring to interest/request about content item/file. Another packet type referred in this document is Data packet, corresponding to data transmitted in response to an interest/request of content (i.e. Interest packet). Indeed, a Data packet may be a chunk of a content item/file. Interest packet leaves traces that a matching chunk (i.e. Data packet) can follow via reverse path, to reach back the original requester. A matching chunk can be found in every node caching a temporary copy or at the server where the permanent copy is stored. In fact, one Interest packet permits to retrieve one Data packet. Hence, a sequence of Interest packets permits to retrieve a sequence of Data packets, i.e. for instance the chunks of a large piece of content such as a video file.

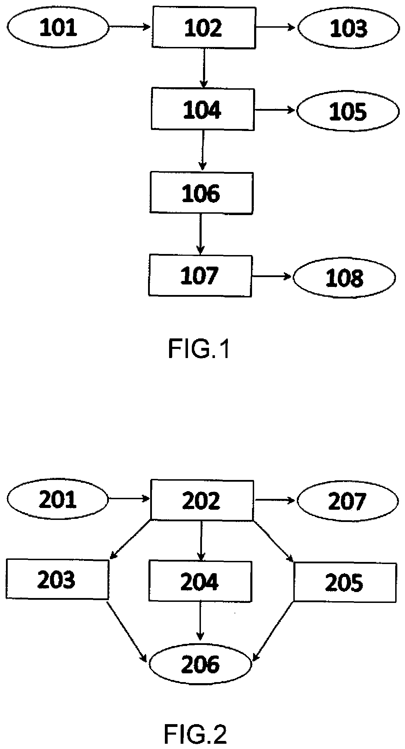

Figure 1 shows the procedure upon reception of an Interest packet. When an Interest packet is received (step **101**) by a node on an incoming interface the node checks for content availability in its Content Store (*CS*), such as a cache/buffer memory (step **102**). If the content is available, the CS sends the requested Data packet back on the incoming interface (step **103**). Otherwise, the node checks in its Pending interest Table (*PIT*) for a pending request, i.e. whether this content has been already requested upward over this interface (step **104**). If an entry is found in the PIT, the PIT is updated (step **105**) in order to track that the incoming interface is waiting for this content. If no PIT entry is found, a new entry is created and the Interest packet is forwarded to one or multiple interfaces determined via longest prefix match on the content name prefixes stored in a Forwarding table (step **106**), referred in the background art as Forwarding Information Base (*FIB*). Moreover, the node can also probe prefixes (here /bell_labs/video/ or /bell_labs/) of content items they can serve by means of routing protocols, i.e. prefixes of permanently stored items. Network nodes receiving these announcements build their forwarding/routing tables accordingly. For instance network nodes store in their routing tables, the shortest paths in terms of delay towards a permanent copy of a file. Chunks of a file are then requested by a receiver, through Interest packets that are forwarded by network nodes towards servers storing permanent copies of the requested chunks.

Interest packet here is a packet type, referring to interest/request about content item/file. Another packet type referred in this document is Data packet, corresponding to data transmitted in response to an interest/request of content (i.e. Interest packet). Indeed, a Data packet may be a chunk of a content item/file. Interest packet leaves traces that a matching chunk (i.e. Data packet) can follow via reverse path, to reach back the original requester. A matching chunk can be found in every node caching a temporary copy or at the server where the permanent copy is stored. In fact, one Interest packet permits to retrieve one Data packet. Hence, a sequence of Interest packets permits to retrieve a sequence of Data packets, i.e. for instance the chunks of a large piece of content such as a video file.

Miura H. et al: Content routing with network support using passive measurement in content distribution networks (XP 010610865) relates to content distribution networks in which user requests are directed to an adequate server from the view point of improvement of latency for obtaining contents. Round trip time passive measurement can improve user response time for both cases that network delay and server processing delay is dominant factor of response time.

EP 2 323 346 relates to adaptive multi-interface use for content networking. It is proposed a connectivity agent which can control the implemented policy by configuring strategy layer without having to process each individual packet. The connectivity agent can configure strategy layer with rules for choosing among multiple interfaces.

Figure 1 shows the procedure upon reception of an Interest packet. When an Interest packet is received (step **101**) by a node on an incoming interface the node checks for content availability in its Content Store (*CS*), such as a cache/buffer memory (step **102**). If the content is available, the CS sends the requested Data packet back on the incoming interface (step **103**). Otherwise, the node checks in its Pending interest Table (*PIT*) for a pending request, i.e. whether this content has been already requested upward over this interface (step **104**). If an entry is found in the PIT, the PIT is updated (step **105**) in order to track that the incoming interface is waiting for this content. If no PIT entry is found, a new entry is created and the Interest packet is forwarded to one or multiple interfaces determined via longest prefix match on the content name prefixes stored in a Forwarding table (step **106**), referred in the background art as Forwarding Information Base (*FIB*). Moreover, the node can also probe interfaces not specified in the FIB (step **107**) in order to discover other available routes and forward the Interest packet (step **108**).

Now with referring to figure 2, the procedure upon reception of a Data packet is shown. When a Data packet is received by a node (step **201**) the node checks for pending requests in its PIT (step **202**). If a pending request is found, the Data packet is first stored in the node CS. The node updates its CS, PIT and FIB entries (respectively steps **203,204,205**) and forwards the Data packet towards all requesting interfaces (step **206**) as listed in the PIT. For example, when a Data packet is received, the node may update in its FIB information about the quality (for instance round-trip time (*RTT*), number of hops) of the interface from which the packet has been received. If no matching PIT entry is found, the Data packet is discarded (step **207**).

Indeed, following the reception of an Interest packet, an ideal name-based routing protocol would have to address all temporary copies of every content item (i.e. Data packets), in order to forward user request towards the "best" (i.e. the closest in term of path/time in the network) available replica. Nevertheless, this is clearly unfeasible in CCN, since:

- in term of network scale, CCN may comprise content of different applications and is not intended to be confined to small, controlled network areas;
- in term of time scale, temporary copies stored at network nodes are highly volatile and the signaling overhead involved by frequent route update would be excessive;
- the nodes forwarding tables (i.e. the FIBs) size are already a matter of concern, even considering only permanent content copies rather than network-cached temporary replicas.

On the other hand, the usage of dynamic forwarding mechanisms, able to discover and exploit temporary content replicas can provide significant benefits in terms of end-user performance and network provider costs.

One idea to solve this problem would be to assume node FIB knowledge about multiple paths in a CCN network, leading toward permanent copies that can be directly exploited by a forwarding strategy. However, it would require a routing protocol that distributes permanent copy availability information, and could not thus be applied to forward requests towards temporary copies.

One existing dynamic forwarding approach for Named-Data-Networking (*NDN*) framework relies on probing interfaces periodically, and gathering statistics for each of them. If for content, an interface is estimated to be better than the currently exploited one, the forwarding plane is switched to that interface. Although this proposition seems to be efficient, it is still needed to provide better performance in terms of end-user (ex: data throughputs) and to reduce network costs (ex: data load).

One object is to provide a solution to the aforementioned problems, and offers other advantages over the prior art.

Another object is to provide a mechanism to realize dynamic request forwarding in a CCN node.

Another object is to improve end-user performance.

Another object is to reduce network costs.

SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later. Various embodiments relate to a method for managing packets over interfaces of a Content Centric Networking node as claimed.

Further, various embodiments relate to a Content Centric Networking node for managing packets as claimed.

Various embodiments further relate to computer program products for performing the above method as claimed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

DESCRIPTION OF THE DRAWING

The objects, advantages and other features of various embodiments will become more apparent from the following disclosure and claims. The following non-restrictive description of preferred embodiments is given for the purpose of exemplification only with reference to the accompanying drawing in which

- Figure 1 is a schematic diagram illustrating reception procedure of an Interest packet, according to the prior art;

- Figure 2 is a schematic diagram illustrating reception procedure of a Data packet, according to the prior art;

- Figure 3 is a schematic diagram illustrating transition phase of a dynamic interest forwarding mechanism, according to various embodiments;

- Figure 4 details the operations of a dynamic interest forwarding mechanism upon reception of an Interest packet, according to various embodiments;

- Figure 5 details the operations of a dynamic interest forwarding mechanism upon reception of a Data packet, according to various embodiments;

- Figure 6 and 7 illustrate performance of a dynamic interest forwarding mechanism over the prior art, according to various embodiments.

DETAILED DESCRIPTION OF ILLUSTRATIVE EMBODIMENTS

In the following embodiments it is proposed to provide a dynamic request mechanism permitting

- to discover paths to temporary copies of a content item that are not addressed in routing tables ;

- to forward requests for the content item towards the "best" performing interface (according to specified metric), while guaranteeing continuous Data delivery and limiting the network overhead.

In one embodiment, the dynamic request mechanism leverages a reinforcement learning approach for routing, and extends it to the case of a CCN cached-network.

One known reinforcement learning approach in the prior art, is Q-routing. In a Q-routing algorithm, each node of a network builds its routing table/FIB, by learning information, such as delivery times of a packet towards other nodes. These information are referred as Q values and are stored by every node $i$ in their FIBs, for all possible destination nodes $d$, through each neighboring node $v$ of node $i$. $Q_i(d,v)$ is a Q value, representing the delivery time of a packet from node $i$ to node $d$ if the packet is forwarded via a neighboring node $v$ among the neighboring nodes. In a Q-routing algorithm, the forwarding of a packet by a node $i$ consists in selecting the interface to the neighboring node $v$, towards a given destination node $d$ with the smallest Q value $Q_i(d,v)$ i.e. the smallest delivery time. For every packet forwarded through a neighboring node $v$, the node $i$ receives in response over the interface with node $v$, the "best" Q value of $v$ that is the minimum delivery time estimated for node $v$ i.e. $\min_{k\_in\_neighbours(v)} Q_v(d,k)$. The associated Q value at node $i$ is then updated as follows:

$$Q_i(d, v) = (1 - \eta).Q_i(d,v) + \eta.(\min_{k\_in\_neighbours(v)} Q_v(f,k) + rtt_{i,v}),$$

where $\eta$ is a value referred as "learning rate", $f$ is a file referring to an Interest packet, $rtt_{i,v}$ denotes the round trip delay between nodes $i$ and $v$.

In fact, Q-routing approach provides an effective way to improve performance with respective shortest path forwarding in presence of dynamic conditions, such as evolutions of links connection between nodes or storage capacities in network.

In a preferred embodiment, the reinforcement learning approach may be based on Q-routing, by implementing a distributed version of Q-learning. This distributed reinforcement learning, is performed at each network node in a CCN network. In fact, a dynamic INterest FORrwarding Mechanism, further referred as INFORM is run by each node in the CCN network.

For at least a given file f/Data packet that can be requested by at least one Interest packet, a node $i$ maintains in its FIB a set of $Q_i(f,v)$ values, for $v$ neighboring nodes in I(i) values, where I(i) denotes the set of interfaces of node $i$. These values are computed and updated during an exploration phase, where a node probes the interfaces in order to learn the cost/reward in terms of residual delay ($rtt_{i,v}$) to the first hitting cache for file $f$/Data Packet associated with each of them. As exposed above, an update step of Q values exploits the knowledge of the smallest Q value of a neighbor node $v$ chosen for forwarding a given Interest packet, this value being piggy-backed in a returning Data packet. Q values are then used during an exploitation phase, to identify the best available interface where to forward Interest packets.

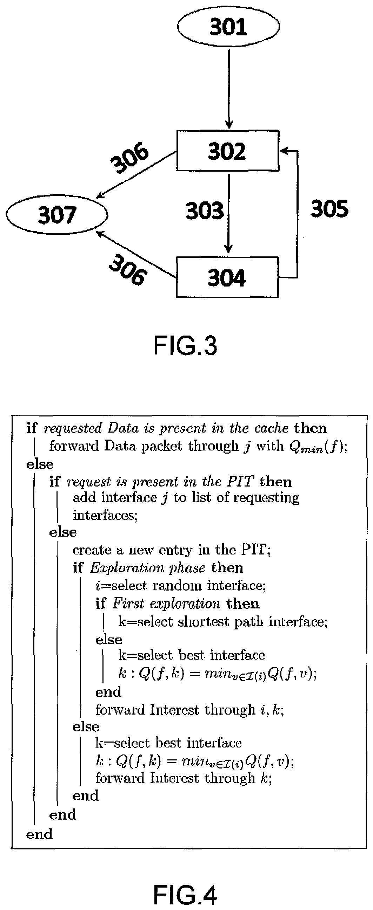

With reference to Figure 3, the transitions phases of INFORM are detailed. The mechanism starts by initializing at node $i$ the set of Q values $Q_i(f,v)$ (step **301**), for neighboring nodes $v$ in I(i) values (set of interfaces of node $i$), when an Interest packet (i.e. a request) for a given Data packet/file $f$ is received and corresponding Q values are not available in the node FIB. A first exploration phase then starts (step **302**). The goal of such initial exploration phase, is to compute/update Q values for the different interfaces in I(i) values, while guaranteeing the delivery of the requested Data packets. To this end, a node $i$ randomly select an interface in I(i) values to forward an incoming Interest packet, and at the same time, forwards the Interest packet over the interface providing the shortest path in terms of delay, towards a permanent copy of the file/Data packet. As a reminder, the shortest paths are stored too in the node FIB according to the content item servers announcements. Indeed, the use of permanent copy of the file permits to guarantee the delivery of Data packets during the exploration phase.

The exploration phase lasts $Nr$ chunks (arrow **303**), i.e. $Nr$ Interest packets are sent by node $i$ to randomly selected interfaces in I(i) values and $Nr$ Data packets are forwarded back through these interfaces with best (i.e. minimum) delivery time values estimated. During this exploration phase Interest packets are also forwarded over the interface providing the shortest path in terms of delay towards a permanent copy of the file/Data packet. Then, Q values are updated, according to the Q value updating step formula mentioned above. After which the interface $k$ providing the minimum delivery delay is identified, i.e.: $Q(f, k) = \min_{v-in-I(i)} Q(f; v)$, and its Q value is stored, i.e. $Qmin(f) = Q(f, k)$.

After the exploration phase (step **302**) the exploitation phase starts (step **304**). The goal of this phase is to exploit the information (Q values) about cost/rewards delays associated with each interface collected during the exploration phase. To do so, an Interest packet is forwarded over the best interface $k$ only, i.e. over the identified interface, providing the minimum time delivery value for a data packet. Data Packet is forwarded back over the same identified interface with the associated minimum time delivery value. Hence, during the exploitation phase the corresponding $Q(f, k)$ value, referring to the identified interface delivery time, is the only one Q value still being updated. The mechanism remains in exploitation phase until

- the reaching of a threshold value that is function of the Data packet delivery time value: $|Qmin(f)-Q(f,k)|/Qmin(f)>\delta$, where $\delta$ is a threshold value. This event, indicates that system state has changed and that Q values need to be updated;

- the duration of $Nt$ chunks, i.e. until the reception of $Nt$ Data packets at most. This event is also required because as, despite the Q value of the best interface is not significantly changed, the state of the other interfaces may have changed.

Consequently, after the exploitation phase (step **304**), if one of this event occurs (arrow **305**) the algorithm returns in exploration phase (step **302**). As previously mentioned, this is required to deal with dynamic content availability, and to update Q values accordingly. Differently from the first exploration phase execution, during all the subsequent explorations an Interest packet (i.e. a request for a data packet) is forwarded towards a randomly selected interface, and, at the same time, towards the previously determined best interface $k$ (rather than shortest path interface previously). At the end of this exploration phase (i.e. after $Nr$ chunks), a new interface $k'$ providing the minimum delay is identified, i.e.: $Q(f,k') = \min_{v \text{ in } I(i)} Q(f,v)$, the minimum Q value is updated, i.e. $Qmin(f) = Q(f, k')$, and the algorithm returns (arrow **303**) in exploitation phase (step **304**).

Finally, Q values associated with a given file $f$/Data packet are deleted (step **307**) when they are not updated for $Te$ time units (arrows **306**), i.e. no Interest packet for file $f$/Data Packet is forwarded by the node during a time period $Te$. This situation may occur indifferently during the exploration or the exploitation phase.

Figure 4 details the operations performed by INFORM upon reception by a node $i$ in a CCN network, of an Interest packet for a Data packet, forwarded from an interface $j$. If the requested Data packet is present in the CS (for example a buffer memory) of the node, then it is send over the interface $j$ that requested it. The minimum value Qmin(f) is also added to the Data packet, as it will be used by downstream nodes to update their Q values. Otherwise if a pending request for the Data packet is not present in the node PIT, and INFORM is in exploration phase, the Interest packet is forwarded over a random interface, and over the best interface (or over the interface towards the shortest path in terms of delay in case of first exploration). Alternatively, if the algorithm is in exploitation phase, the Interest packet is forwarded towards the best interface $k$ only,

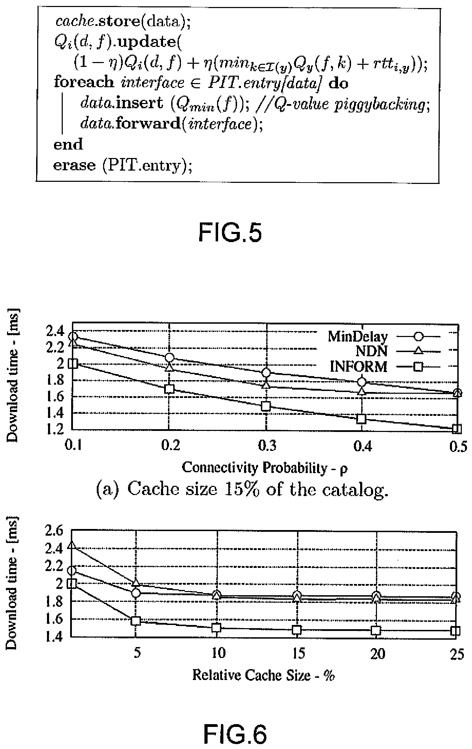

Figure 5 shows operations performed by INFORM upon reception by a node $i$ in a CCN network, of a Data packet on interface $j$ from a neighbor node $y$. After storing the received Data packet in its CS (such as cache), the Q value associated with the incoming interface $j$ of the considered file $f$ is updated. Finally, the list of requesting interfaces of the Data Packet, is looked up from the PIT of node $i$, and the Data packet is forwarded towards the interested interfaces then the PIT entry is finally removed.

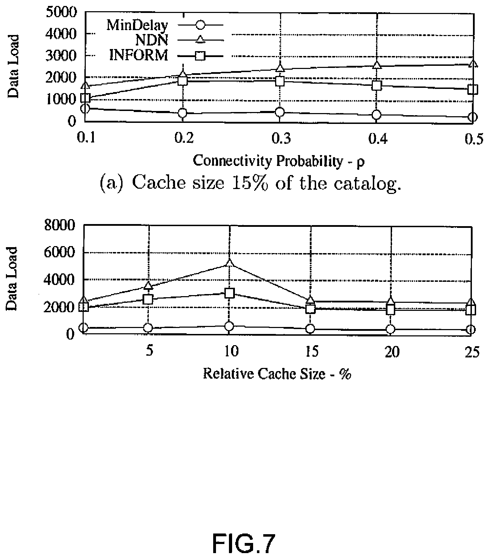

As illustration of the achievable performance with the disclosed mechanism, figures 6 and 7 report the results obtained by means of packet-level simulation under several scenarios.

In all scenarios, a network topology is modeled as an Erdos-Renyi graph G(n, p) where $n$ is the number of nodes and $p$ is the probability that a link connecting two nodes does exist. We assume $b$ is a number of border routers among the $n$ nodes where users are connected to, and $s<=n$ is the number of content servers connected to the network.

It is assumed herein that n=22, b=8, s=1, and p=0.3. It is further assumed that every node is equipped with a cache of size c =15% of a content catalog and implements a Least Recently Used (LRU) replacement policy. The placement of border routers and servers are randomly generated, results are averaged over multiple simulation runs, and cache warm up period is not considered. Users generate content requests according to a Poisson process of intensity $\lambda$=1 request per second per border router. A catalog of 10^5 content items (i.e. files) is chosen, whose popularity is a Zipf distribution with $\alpha$=1. It is assumed too, that each content item is composed of 100 independent Data packets that are permanently stored at content servers $s$. Finally, the FIBs of the nodes are configured with next hop information for the minimum delay path towards one of the permanent content item copy.

On Figures 6 and 7, INFORM is compared with min-delay path forwarding and a NDN forwarding scheme supposed to be currently one of the best available existing solutions.

To do so, two metrics are considered herein:

- the Data packet delivery time, which represents the time elapsing between a client expression of a Interest for a given packet, and the reception of the corresponding Data packet;

- the Data load, defined as the average number of Data packets owing through the network in one time unit.

Moreover, the learning rate is set to $\eta$=0.7, the duration of the exploration phase to Nr=50 chunks, and the duration of the exploitation phase to Nt=100 chunks.

Curve (a) of figure 6, reports the average Data packet delivery time as a function of the network connectivity (i.e. probability $p$ that any two nodes are connected), which determines the number of available paths between clients and servers. It is clearly observed, that the delivery time decreases as the network connectivity increases. As the number of links in the network increases, the distance between clients and servers is reduced, with a consequence decrease in the delivery time. INFORM provides the smallest delivery time among the three mechanisms for all connectivity values. Specifically, it provides a performance improvement between 18-33% with respect to simple min-delay path forwarding, and between 10-33% with respect to the NDN forwarding strategy. The performance gap increases with the connectivity, testifying that INFORM can better exploit an increasing number of paths.

Curve (b) of figure 6, shows the average Data packet delivery time as a function of the cache size. It is observed that the delivery time sharply decreases as the cache size increases (until additional storage does not provide any additional benefits). Moreover INFORM outperforms other algorithms for all cache sizes providing an improvement of 22-25% with respect to the NDN forwarding strategy and 5-26% with respect to min-delay path forwarding.

Curves (a) and (b) of Figure 7, report the Data load as a function of the network connectivity and cache size respectively. It is observed that INFORM generates less traffic than the NDN forwarding scheme, but clearly more than min-delay path forwarding. As the network connectivity or cache size increase, the Data load decreases for min-delay path forwarding. Differently, for INFORM and NDN, the Data load first increases and then decreases as the connectivity and cache size increase. Additional links in the network or storage capacity increase the availability of temporary item replicas that are discovered by such algorithms: it follows requests are forwarded through longer paths to reach those replicas resulting in a higher Data Load. After a certain threshold, the load decreases as more links or additional storage capacity do not increase item availability but only shorten the distance between clients and item copies thus reducing the load on the network.

Advantageously, the above described embodiments permit to provide a dynamic request forwarding mechanism that clearly outperforms current existing solutions in terms of end-user performance (i.e. delivery time) and network costs (reductions of the load in the network).

Advantageously, the disclosed embodiments make feasible the implementation of dynamic forwarding algorithms in CCN nodes, and more generally within high-speed network equipments in order to provide the best performance.

**Claims**

1. A method for managing packets (f) over interfaces (i, j, k) of a Content Centric Networking node (i), the method comprising the following steps

    - receiving over a first interface (j) of the node (i) at least a request for a data packet (f);
    - if the data packet (f) is stored by the node (i), forwarding the data packet (f) over the first interface (j) of the received request; otherwise
    - performing an exploration step (302), by

        ◦ selecting randomly a second interface (i) out of a set of interfaces of the node (i) towards a neighboring node (v) ;
        ◦ forwarding the request over the second interface (i);
        ◦ receiving in response over the second interface (i)-the data packet (f) with associated time delivery value towards a copy of the packet (f) estimated by the neighboring node (v);
        o selecting a third interface (k) out of a set of interfaces of the node (i) towards a neighboring node (v), the third interface (k) providing the shortest path in terms of delay towards a permanent copy of the data packet;
        o forwarding the request over the third interface (k);
        o receiving in response over the third interface (k) the data packet (f) with associated time delivery value towards a copy of the packet (f) estimated by the neighboring node (v);

    - identifying an interface providing the minimum data packet delivery time value based on exploration step results.

2. The method according to claim 1, further comprising an exploitation step performed by

    - using the identified interface providing the minimum data packet delivery time, to forward the request and receive back the data packet;
    - receiving for the data packet, associated minimum time delivery value estimated over the identified interface.

3. The method according to any of the claim 1, wherein during the exploration step, if an interface providing the minimum time delivery value is identified, forwarding the request at the same time as the randomly selected interface over the identified interface.

4. The method according to any of claims 2 to 3, wherein the exploration step is performed until a first event, the first event being the reception of a predefined number of data packets.

5. The method, according to claim 4, wherein the exploitation step is performed following the said first event.

6. The method according to claim 5, wherein the exploitation step is performed until a second event, the second event being the reaching of a threshold value that is function of minimum time delivery value estimated.

7. The method according to any of claims 5 or 6, wherein the exploitation step is performed until a third event, the third event being the reception of a predefined number of data packets at most.

8. The method according to claim 7, wherein the exploration step is performed following the second event or the third event.

9. The method according to any of claims 1 to 8, wherein information referring to delivery time values is stored in a Forwarding Information Base of the node.

10. The method according to claim 9, wherein the said information are deleted from the Forwarding Information Base of the node when no request for data packet is forwarded by the node during a predefined time period.

11. The method according to claim 9 or 10, wherein the said information is initialized when a request for a data packet is received and the information are not available in the Forwarding Information Base of the node.

12. The method according to any of the preceding claims, further comprising a storing step of received data packet in a Content Store of the node and a forwarding step of the received data packet over the interface used for receiving the request.

13. A Content Centric Networking node (i) for managing packets (f) over interfaces (i, j, k) of the Content Centric Networking Node (i), the node (i) being configured for

- receiving over a first interface (i) of the node (i) at least a request for a data packet (f);
- forwarding the data packet (f) over the first interface (j) of the received request if the data packet (f) is stored by the node (i); otherwise
- performing an exploration step (302), by

  ◦ selecting randomly a second interface (i) out of a set of interfaces of the node (i) towards a neighboring node (v);
  ◦ forwarding the request over the second interface (i);
  ◦ receiving in response over the second interface (i) the data packet (f) with associated time delivery value towards a copy of the packet (f) estimated by the neighboring node (v);
  ◦ selecting a third interface (k) out of a set of interfaces of the node (i) towards a neighboring node (v), the third interface (k) providing the shortest path in terms of delay towards a permanent copy of the data packet;
  ◦ forwarding the request over the third interface (k);
  o receiving in response over the third interface (k) the data packet (f) with associated time delivery value towards a copy of the packet (f) estimated by the neighboring node (v);

- identifying an interface providing the minimum data packet delivery time value based on exploration step results.

14. A Content Centric Networking node (i) configured to execute all the steps of the method according to one of the claims 1 to 12.

15. Computer program product for performing instructions corresponding to all the steps of the method according to one of claims 1 to 12.

**Patentansprüche**

1. Verfahren zum Verwalten von Paketen (f) über Schnittstellen (i, j, k) eines Knotens (i) einer inhaltszentrierten Vernetzung, wobei das Verfahren folgende Schritte umfasst

   - Empfangen von mindestens einer Anforderung für ein Datenpaket (f) über eine erste Schnittstelle (j) des Knotens (i);
   - wenn das Datenpaket (f) vom Knoten (i) gespeichert wird, Weiterleiten des Datenpakets (f) über die erste Schnittstelle (j) der empfangenen Anforderung; andernfalls
   - Durchführen eines Erkundungsschritts (302) durch

     ◦ zufälliges Auswählen einer zweiten Schnittstelle (i) aus einem Satz von Schnittstellen des Knotens (i) zu einem benachbarten Knoten (v);
     ◦ Weiterleiten der Anforderung über die zweite Schnittstelle (i);
     ◦ Empfangen, in Reaktion, des Datenpakets (f) mit verknüpftem Zeitlieferwert zu einer Kopie des Pakets (f), der vom benachbarten Knoten (v) geschätzt wurde, über die zweite Schnittstelle (i);
     ◦ Auswählen einer dritten Schnittstelle (k) aus einem Satz von Schnittstellen des Knotens (i) zu einem benachbarten Knoten (v), wobei die dritte Schnittstelle (k) hinsichtlich der Verzögerung zu einer permanenten Kopie des Datenpakets den kürzesten Pfad bereitstellt;
     ◦ Weiterleiten der Anforderung über die dritte Schnittstelle (k);
     ◦ Empfangen, in Reaktion, des Datenpakets (f) mit verknüpftem Zeitlieferwert zu einer Kopie des Pakets (f), der vom benachbarten Knoten (v) geschätzt wurde, über die dritte Schnittstelle (k);

- Identifizieren einer Schnittstelle, die auf Basis von Ergebnissen des Erkundungsschritts den minimalen Datenpaketlieferzeitwert bereitstellt.

2. Verfahren nach Anspruch 1, das ferner einen Ausbeutungsschritt umfasst, der durch Folgendes durchgeführt wird

- Verwenden der identifizierten Schnittstelle, die die minimale Datenpaketlieferzeit bereitstellt, um die Anforderung weiterzuleiten und das Datenpaket zurück zu empfangen;
- Empfangen eines geschätzten verknüpften minimalen Zeitlieferwerts über die identifizierte Schnittstelle für das Datenpaket.

3. Verfahren nach einem von Anspruch 1, wobei, wenn während des Erkundungsschritts eine Schnittstelle, die den minimalen Zeitlieferwert bereitstellt, identifiziert wird, Weiterleiten der Anforderung zur selben Zeit wie die zufällig ausgewählte Schnittstelle über die identifizierte Schnittstelle.

4. Verfahren nach einem der Ansprüche 2 bis 3, wobei der Erkundungsschritt bis zu einem ersten Ereignis durchgeführt wird, wobei das erste Ereignis der Empfang einer vordefinierten Anzahl von Datenpaketen ist.

5. Verfahren nach Anspruch 4, wobei der Ausbeutungsschritt nach dem ersten Ereignis durchgeführt wird.

6. Verfahren nach Anspruch 5, wobei der Ausbeutungsschritt bis zu einem zweiten Ereignis durchgeführt wird, wobei das zweite Ereignis das Erreichen eines Schwellwerts ist, der eine Funktion des geschätzten minimalen Zeitlieferwerts ist.

7. Verfahren nach einem der Ansprüche 5 bis 6, wobei der Ausbeutungsschritt bis zu einem dritten Ereignis durchgeführt wird, wobei das dritte Ereignis der Empfang einer höchsten vordefinierten Anzahl von Datenpaketen ist.

8. Verfahren nach Anspruch 7, wobei der Erkundungsschritt nach dem zweiten Ereignis oder dem dritten Ereignis durchgeführt wird.

9. Verfahren nach einem der Ansprüche 1 bis 8, wobei Informationen, die sich auf Lieferzeitwerte beziehen, in einer Weiterleitungsinformationsbasis des Knotens gespeichert werden.

10. Verfahren nach Anspruch 9, wobei die Informationen aus der Weiterleitungsinformationsbasis des Knotens gelöscht werden, wenn vom Knoten während einer vordefinierten Zeitperiode keine Anforderung für ein Datenpaket weitergeleitet wird.

11. Verfahren nach Anspruch 9 oder 10, wobei die Informationen initialisiert werden, wenn eine Anforderung für ein Datenpaket empfangen wird und die Informationen in der Weiterleitungsinformationsbasis des Knotens nicht verfügbar sind.

12. Verfahren nach einem der vorhergehenden Ansprüche, das ferner einen Schritt des Speicherns eines empfangenen Datenpakets in einem Inhaltsspeicher des Knotens und einen Schritt des Weiterleitens des empfangenen Datenpakets über die Schnittstelle, die zum Empfangen der Anforderung verwendet wird, umfasst.

13. Knoten (i) einer inhaltszentrierten Vernetzung zum Verwalten von Paketen (f) über Schnittstellen (i, j, k) des Knotens (i) einer inhaltszentrierten Vernetzung, wobei der Knoten (i) zu Folgendem ausgelegt ist

- Empfangen von mindestens einer Anforderung für ein Datenpaket (f) über eine erste Schnittstelle (i) des Knotens (i);
- Weiterleiten des Datenpakets (f) über die erste Schnittstelle (j) der empfangenen Anforderung, wenn das Datenpaket (f) vom Knoten (i) gespeichert wird; andernfalls
- Durchführen eines Erkundungsschritts (302) durch

∘ zufälliges Auswählen einer zweiten Schnittstelle (i) aus einem Satz von Schnittstellen des Knotens (i) zu einem benachbarten Knoten (v);
∘ Weiterleiten der Anforderung über die zweite Schnittstelle (i);
∘ Empfangen, in Reaktion, des Datenpakets (f) mit verknüpftem Zeitlieferwert zu einer Kopie des Pakets (f), der vom benachbarten Knoten (v) geschätzt wurde, über die zweite Schnittstelle (i);

◦ Auswählen einer dritten Schnittstelle (k) aus einem Satz von Schnittstellen des Knotens (i) zu einem benachbarten Knoten (v), wobei die dritte Schnittstelle (k) hinsichtlich der Verzögerung zu einer permanenten Kopie des Datenpakets den kürzesten Pfad bereitstellt;
◦ Weiterleiten der Anforderung über die dritte Schnittstelle (k);
◦ Empfangen, in Reaktion, des Datenpakets (f) mit verknüpftem Zeitlieferwert zu einer Kopie des Pakets (f), der vom benachbarten Knoten (v) geschätzt wurde, über die dritte Schnittstelle (k);

- Identifizieren einer Schnittstelle, die auf Basis von Ergebnissen des Erkundungsschritts den minimalen Datenpaketlieferzeitwert bereitstellt.

**14.** Knoten (i) einer inhaltszentrierten Vernetzung, der dazu ausgelegt ist, alle Schritte des Verfahrens nach einem der Ansprüche 1 bis 12 auszuführen.

**15.** Computerprogrammprodukt zum Durchführen von Anweisungen, die allen Schritten des Verfahrens nach einem der Ansprüche 1 bis 12 entsprechen.

## Revendications

**1.** Procédé pour gérer des paquets (f) sur des interfaces (i, j, k) d'un noeud de réseautage centré sur le contenu (i), le procédé comprenant les étapes suivantes :

- la réception, sur une première interface (j) du noeud (i), d'au moins une demande pour un paquet de données (f) ;
- si le paquet de données (f) est stocké par le noeud (i), le transfert du paquet de données (f) sur la première interface (j) de la demande reçue ; sinon
- la réalisation d'une étape d'exploration (302),

◦ en sélectionnant de manière aléatoire une deuxième interface (i) parmi un ensemble d'interfaces du noeud (i) vers un noeud voisin (v) ;
◦ en transférant la demande sur la deuxième interface (i) ;
◦ en recevant en réponse sur la deuxième interface (i) le paquet de données (f) avec une valeur de distribution temporelle associée vers une copie du paquet (f) estimée par le noeud voisin (v) ;
◦ en sélectionnant une troisième interface (k) parmi un ensemble d'interfaces du noeud (i) vers un noeud voisin (v), la troisième interface (k) fournissant le trajet le plus court en termes de retard vers une copie permanente du paquet de données ;
◦ en transférant la demande sur la troisième interface (k) ;
◦ en recevant en réponse sur la troisième interface (k) le paquet de données (f) avec une valeur de distribution temporelle associée vers une copie du paquet (f) estimée par le noeud voisin (v) ;

- l'identification d'une interface fournissant la valeur de temps de distribution de paquet de données minimal en se basant sur des résultats d'étape d'exploration.

**2.** Procédé selon la revendication 1, comprenant en outre une étape d'exploitation réalisée

- en utilisant l'interface identifiée fournissant le temps de distribution de paquet de données minimal pour transférer la demande et pour recevoir à nouveau le paquet de données ;
- en recevant, pour le paquet de données, une valeur de distribution temporelle minimale associée estimée sur l'interface identifiée.

**3.** Procédé selon l'une quelconque de la revendication 1, dans lequel, pendant l'étape d'exploration, si une interface fournissant la valeur de distribution temporelle minimale est identifiée, le transfert de la demande au même moment que l'interface sélectionnée de manière aléatoire sur l'interface identifiée.

**4.** Procédé selon l'une quelconque des revendications 2 et 3, dans lequel l'étape d'exploration est réalisée jusqu'à un premier événement, le premier événement étant la réception d'un nombre prédéfini de paquets de données.

**5.** Procédé selon la revendication 4, dans lequel l'étape d'exploitation est réalisée après ledit premier événement.

**6.** Procédé selon la revendication 5, dans lequel l'étape d'exploitation est réalisée jusqu'à un deuxième événement, le deuxième événement étant l'atteinte d'une valeur de seuil qui est fonction de la valeur de distribution temporelle minimale estimée.

**7.** Procédé selon l'une quelconque des revendications 5 ou 6, dans lequel l'étape d'exploitation est réalisée jusqu'à un troisième événement, le troisième événement étant la réception d'un nombre prédéfini de paquets de données au maximum.

**8.** Procédé selon la revendication 7, dans lequel l'étape d'exploration est réalisée après le deuxième événement ou le troisième événement.

**9.** Procédé selon l'une quelconque des revendications 1 à 8, dans lequel des informations se rapportant à des valeurs de temps de distribution sont stockées dans une base d'informations de transfert du noeud.

**10.** Procédé selon la revendication 9, dans lequel lesdites informations sont supprimées de la base d'informations de transfert du noeud lorsqu'aucune demande pour un paquet de données n'est transférée par le noeud pendant une période de temps prédéfinie.

**11.** Procédé selon la revendication 9 ou 10, dans lequel lesdites informations sont initialisées lorsqu'une demande pour un paquet de données est reçue et que les informations ne sont pas disponibles dans la base d'informations de transfert du noeud.

**12.** Procédé selon l'une quelconque des revendications précédentes, comprenant en outre une étape de stockage d'un paquet de données reçu dans un magasin de contenu du noeud et une étape de transfert du paquet de données reçu sur l'interface utilisée pour recevoir la demande.

**13.** Noeud de réseautage centré sur le contenu (i) pour gérer des paquets (f) sur des interfaces (i, j, k) du noeud de réseautage centré sur le contenu (i), le noeud (i) étant configuré :

- pour recevoir, sur une première interface (i) du noeud (i), au moins une demande pour un paquet de données (f) ;
- pour transférer le paquet de données (f) sur la première interface (j) de la demande reçue si le paquet de données (f) est stocké par le noeud (i) ; sinon
- pour réaliser une étape d'exploration (302),

    ◦ en sélectionnant de manière aléatoire une deuxième interface (i) parmi un ensemble d'interfaces du noeud (i) vers un noeud voisin (v) ;
    ◦ en transférant la demande sur la deuxième interface (i) ;
    ◦ en recevant en réponse sur la deuxième interface (i) le paquet de données (f) avec une valeur de distribution temporelle associée vers une copie du paquet (f) estimée par le noeud voisin (v) ;
    ◦ en sélectionnant une troisième interface (k) parmi un ensemble d'interfaces du noeud (i) vers un noeud voisin (v), la troisième interface (k) fournissant le trajet le plus court en termes de retard vers une copie permanente du paquet de données ;
    ◦ en transférant la demande sur la troisième interface (k) ;
    ◦ en recevant en réponse sur la troisième interface (k) le paquet de données (f) avec une valeur de distribution temporelle associée vers une copie du paquet (f) estimée par le noeud voisin (v) ;

- pour identifier une interface fournissant la valeur de temps de distribution de paquet de données minimal en se basant sur des résultats d'étape d'exploration.

**14.** Noeud de réseautage centré sur le contenu (i) configuré pour exécuter toutes les étapes du procédé selon l'une des revendications 1 à 12.

**15.** Produit-programme d'ordinateur pour exécuter des instructions correspondant à toutes les étapes du procédé selon l'une des revendications 1 à 12.

FIG.1

FIG.2

FIG.3

if *requested Data is present in the cache* then
    forward Data packet through $j$ with $Q_{min}(f)$;
else
    if *request is present in the PIT* then
        add interface $j$ to list of requesting
        interfaces;
    else
        create a new entry in the PIT;
        if *Exploration phase* then
            $i$=select random interface;
            if *First exploration* then
                $k$=select shortest path interface;
            else
                $k$=select best interface
                $k : Q(f,k) = min_{v \in \mathcal{I}(i)} Q(f,v)$;
            end
            forward Interest through $i,k$;
        else
            $k$=select best interface
            $k : Q(f,k) = min_{v \in \mathcal{I}(i)} Q(f,v)$;
            forward Interest through $k$;
        end
    end
end

FIG.4

```
cache.store(data);
Qᵢ(d, f).update(
```
$$(1 - \eta)Q_i(d, f) + \eta(min_{k \in \mathcal{I}(y)}Q_y(f, k) + rtt_{i,y}));$$
```
foreach interface ∈ PIT.entry[data] do
    data.insert (Q_min(f)); //Q-value piggybacking;
    data.forward(interface);
end
erase (PIT.entry);
```

# FIG.5

(a) Cache size 15% of the catalog.

# FIG.6

(a) Cache size 15% of the catalog.

FIG.7

**EP 2 835 942 B1**

## REFERENCES CITED IN THE DESCRIPTION

**Patent documents cited in the description**

- EP 2323346 A